# EUROPÄISCHE PATENTSCHRIFT

(11) **EP 3 894 308 B1**
(45) Veröffentlichungstag und Bekanntmachung des Hinweises auf die Patenterteilung: **24.09.2025**
(21) Anmeldenummer: 19798590.6
(22) Anmeldetag: 04.11.2019
(51) Int. Cl.: B62J 1/00, B60N 2/90, B62J 1/10

(54) **VERSTELLBARE SITZBAUGRUPPE FÜR EIN KRAFTRAD SOWIE KRAFTRAD**
ADJUSTABLE SEAT ASSEMBLY FOR A MOTORCYCLE, AND MOTORCYCLE
ENSEMBLE SIÈGE RÉGLABLE DE MOTOCYCLE ET MOTOCYCLE

(30) Priorität: 14.12.2018 DE 102018132231
(43) Veröffentlichungstag der Anmeldung: 20.10.2021
(73) Patentinhaber: Bayerische Motoren Werke Aktiengesellschaft, 80809 München (DE)
(72) Erfinder: SEILER, Joerg, 80939 München (DE); NIKOLIC, Miroslav, 80992 München (DE); DIEHL, Helmut, 82431 Kochel (DE); BEUTING, Guido, 80689 Muenchen (DE); SCHELL, Raimund, 85764 Oberschleissheim (DE); HAHN-WOERNLE, Christian, 80802 München (DE)
(86) Internationale Anmeldenummer: PCT/EP2019/080026
(87) Internationale Veröffentlichungsnummer: WO 2020/120027

(56) Entgegenhaltungen:
- EP-A1- 2 298 632
- EP-A2- 1 437 293
- WO-A1-2013/124829
- CN-A- 1 746 067
- DE-U1- 202014 001 509
- US-A- 4 462 634
- US-A- 5 975 629

## Beschreibung

Die Erfindung betrifft eine verstellbare Sitzbaugruppe für ein Kraftrad sowie ein Kraftrad.

Motorräder mit einer höhenverstellbaren Sitzbank sind in verschiedenen Varianten bekannt. Zur Höhenverstellung der Sitzbank ist typischerweise unterhalb der Sitzbank eine Verstellvorrichtung vorgesehen, die mechanisch oder elektrisch betätigt wird und die dazu ausgebildet ist, die Höhe der Sitzbank zu verstellen.

Die Sitzbank grenzt bei Motorrädern üblicherweise an den Tank des Motorrads. Bei einer Höhenverstellung der Sitzbank verändert sich daher eine Fuge, die sich zwischen dem Tank und der Sitzbank befindet. Wird die Fuge zu groß, kann Regenwasser in die Fuge eindringen und zu unter der Sitzbank befindlichen Bauteilen des Motorrads gelangen. Außerdem kann eine zu große Fuge beim Kunden den Eindruck einer niedrigen Wertigkeit hervorrufen.

Die EP 2 298 632 A1 offenbart eine Sitzbaugruppe gemäß dem Oberbegriff des Anspruchs 1.

Die gattungsgemäße WO 2013 124 829 A1 offenbart eine Sitzbaugruppe für ein Motorrad mit einer Sitzwanne, die mit einem Sitzpolster bezogen werden kann. Die Sitzwanne weist ein hohles Fach auf, in welches durch eine verschließbare Öffnung von unten verschiedene Einsätze eingesetzt werden können, welche das Sitzpolster stützen, dabei werden die Merkmale der Präambel des Anspruchs 1 offengelegt.

Die US 5 975 629 A1 offenbart eine Sitzbaugruppe, bei der die Form eines Sitzpolsters mittels aufblasbarer Kammern verändert werden kann, die unter dem Sitzpolster angeordnet sind.

Die DE 20 2014 001 509 U1 offenbart ein Kinderlaufrad mit einem Sattel, der im Sitzpunkt in Höhe und Neigung verstellbar ist.

Die US 4 462 634 A1 offenbart eine Sitzbaugruppe mit einer Basisschale und einer Verstellschale auf, wobei die Basisschale und die Verstellschale an ihrem vorderen Ende mittels eines Scharniers miteinander verbunden sind. Ein Winkel zwischen der Basisschale und der Verstellschale ist mittels einer Abdrückschraube einstellbar.

Die EP 1 437 293 A2 offenbart eine Sitzbaugruppe für ein Motorrad, bei der unterhalb der Sitzbaugruppe ein Verstauraum gebildet ist.

Die CN 1 746 067 A offenbart eine Sitzbaugruppe für einen Motorroller, bei der die Höhe eines Sitzpolsters mittels einer Verstellschraube einstellbar ist.

Aufgabe der Erfindung ist es daher, ein Kraftrad mit einer verstellbaren Sitzbaugruppe bereitstellen, bei dem die Nachteile aus dem Stand der Technik behoben sind.

Die Aufgabe wird erfindungsgemäß gelöst durch eine verstellbare Sitzbaugruppe für ein Kraftrad gemäß Anspruch 1.

Eine Sitzfläche für einen Fahrer und gegebenenfalls für einen Beifahrer ist dabei auf einem Sitzpolster vorgesehen, das am zweiten Abschnitt der Sitzwanne angebracht ist. Unter der Sitzwanne sind dabei sämtliche Rahmenteile der Sitzbaugruppe zu verstehen, nicht also beispielsweise Sitzpolster der Sitzbaugruppe, die an der Sitzwanne angebracht sind.

Mittels der Verstelleinrichtung ist daher also der Teil der Sitzwanne verstellbar, welche der tatsächlichen Sitzfläche zugeordnet ist. Der erste Abschnitt der Sitzwanne, welchem dementsprechend keine Sitzfläche zugeordnet ist, ist hingegen fest und unverstellbar mit einem Bauteil des Kraftrads verbunden, insbesondere mit einem Rahmenteil des Kraftrads, wobei der erste Abschnitt in Bezug auf die Längsrichtung des Kraftrads vor dem zweiten Abschnitt angeordnet ist.

Dadurch ist eine bei einer Höhen- und/oder Neigungsverstellung des zweiten Abschnitts und damit der Sitzfläche gleichbleibende Fuge zwischen dem ersten Abschnitt und dem Bauteil des Kraftrads gewährleistet. Die Größe der Fuge kann dabei so gewählt werden, dass ein Eindringen von Regenwasser unter die verstellbare Sitzbaugruppe verhindert ist. Durch die erfindungsgemäße Sitzbaugruppe ist daher ein zuverlässiger Wetterschutz von unter der Sitzbaugruppe liegenden Bauteilen des Kraftrads erreicht.

Die Verstelleinrichtung umfasst ein Stützelement, auf dem der zweite Abschnitt aufliegt und das am Kraftrad anbringbar ist, wobei das Stützelement die Höhe und/oder die Neigung des zweiten Abschnitts gegenüber dem ersten Abschnitt festlegt. Wird die Sitzwanne am Kraftrad angebracht, so bildet das Stützelement einen Abstandshalter, der zumindest abschnittsweise den Abstand des zweiten Abschnitts der Sitzwanne von der Karosserie des Motorrads und damit die Höhe und/oder die Neigung des zweiten Abschnitts gegenüber dem ersten Abschnitt festlegt.

Das Stützelement ist austauschbar. Das Stützelement kann also durch ein anders gestaltetes Stützelement ersetzt werden, insbesondere wobei die verschiedenen Stützelemente jeweils eine andere Höhe und/oder Neigung des zweiten Abschnitts gegenüber dem ersten Abschnitt festlegen. Um die Höhe und/oder die Neigung der Sitzfläche zu verstellen muss also einfach nur das Stützelement gegen ein anderes Stützelement ausgetauscht werden.

Alternativ oder zusätzlich kann das Stützelement selbst zwischen wenigstens zwei Stellungen verstellbar sein, wobei die beiden Stellungen voneinander verschiedene Höhen und/oder Neigungen des zweiten Abschnitts gegenüber dem ersten Abschnitt festlegen.

Die Verstelleinrichtung kann elektrisch und/oder mechanisch betätigbar sein. Dementsprechend umfasst die Verstelleinrichtung einen Elektromotor und/oder einen mechanischen Mechanismus, mittels dem die Neigung und/oder die Höhe des zweiten Abschnitts über dem ersten Abschnitt verstellbar ist. Die Höhen- und/oder Neigungsverstellung kann zumindest teilweise automatisch und/oder manuell erfolgen.

Vorzugsweise ist die Verstelleinrichtung dabei betätigbar, ohne dass Teile, wie das Sitzpolster von der Sitzbaugruppe abgenommen werden müssen. Zu diesem Zweck kann die Verstelleinrichtung ein von außerhalb des Kraftrads zugängliches Betätigungselement aufweisen, wie ein Stellrad zur Betätigung des mechanischen Mechanismus und/oder einen Betätigungsschalter für den Elektromotor.

Insbesondere ist mittels des Elektromotors und/oder mittels des mechanischen Mechanismus das oben beschriebene Stützelement zwischen den wenigstens zwei Stellungen verstellbar.

Grundsätzlich kann die Verstelleinrichtung jedoch jeden aus dem Stand der Technik bekannten Stellmechanismus umfassen, der dazu geeignet ist, die Höhe und/oder die Neigung des zweiten Abschnitts gegenüber dem ersten Abschnitt zu verändern.

Gemäß einer Ausgestaltung der Erfindung ist die Verstelleinrichtung dazu ausgebildet, den zweiten Abschnitt der Sitzwanne derart zu verstellen, dass eine dem zweiten Abschnitt zugeordnete Sitzfläche im Wesentlichen parallel zur Sitzfläche verschoben wird. "Parallel verschoben" bedeutet im Rahmen dieser Offenbarung, dass die Sitzfläche eine Parallelverschiebung erfährt. Anders ausgedrückt handelt es sich um eine reine Höhenverstellung der Sitzbank. Die Neigung der Sitzfläche ändert sich dabei also nicht.

Gemäß einem weiteren Aspekt der Erfindung sind der erste und der zweite Abschnitt der Sitzwanne zumindest über einen Teil der Verstelleinrichtung miteinander verbunden. Der erste und der zweite Abschnitt der Sitzwanne bilden zusammen mit dem Teil der Verstelleinrichtung eine vorgefertigte Baueinheit, die als Ganzes am Kraftrad verbaut werden kann. Dadurch ist die Montage der Sitzbaugruppe am Kraftrad erleichtert, da dabei nicht mehr auf eine relative Positionierung der beiden Abschnitte der Sitzwanne geachtet werden muss.

Alternativ können der erste und der zweite Abschnitt der Sitzwanne auch separat voneinander ausgebildet, insbesondere nicht direkt miteinander verbunden sein. Vorzugsweise ist die Verstelleinrichtung dann lediglich mit dem zweiten Abschnitt verbunden, insbesondere also nicht mit dem ersten Abschnitt verbunden.

Insbesondere umfasst die Verstelleinrichtung wenigstens ein Gelenkelement, das den ersten und den zweiten Abschnitt relativ zueinander schwenkbar verbindet. Eine Neigungs- und/oder Höhenverstellung des zweiten Abschnitts erfolgt in dieser Ausgestaltung der Erfindung dadurch, dass der zweite Abschnitt gegenüber dem ersten Abschnitt vom wenigstens einen Gelenkelement geführt verschwenkt wird. Es können auch mehrere Gelenkelemente vorgesehen sein, die den ersten und den zweiten Abschnitt relativ zueinander schwenkbar verbinden.

Zwischen dem ersten Abschnitt und dem zweiten Abschnitt kann dabei ein Spiel vorgesehen sein, um bei der Schwenkbewegung auftretende Abstandsänderungen zwischen dem ersten Abschnitt und dem zweiten Abschnitt kompensieren.

Ein weiterer Aspekt der Erfindung sieht vor, dass die Sitzbaugruppe ein erstes Sitzpolster und ein zweites Sitzpolster aufweist, wobei das erste und das zweite Sitzpolster am ersten beziehungsweise am zweiten Abschnitt der Sitzwanne angeordnet sind, insbesondere befestigt. Die Sitzfläche für den Fahrer und gegebenenfalls für den Beifahrer ist dabei auf dem zweiten Sitzpolster vorgesehen, während es sich bei dem ersten Sitzpolster im Wesentlichen um ein Zierbauteil handeln kann.

Vorzugsweise sind die beiden Sitzpolster mit einem gemeinsamen Sitzpolsterbezug bezogen. Dadurch ist zuverlässig verhindert, dass Regenwasser und/oder Schmutz in Fugen zwischen den Sitzpolster gelangen kann.

Die Aufgabe wird außerdem erfindungsgemäß gelöst durch ein Kraftrad mit einer oben beschriebenen Sitzbaugruppe und den Merkmalen des Anspruchs 8, wobei der erste Abschnitt der Sitzwanne fest und unverstellbar mit einem Bauteil, insbesondere einem Karosseriebauteil und/oder einem Rahmenbauteil, des Kraftrads verbunden ist. Wie oben bereits erläutert, ist nur der zweite Abschnitt der Sitzwanne, dem die Sitzfläche für den Fahrer und gegebenenfalls für den Beifahrer zugeordnet ist, gegenüber dem Kraftrad neigungs- und/oder höhenverstellbar. Der erste Abschnitt ist hingegen unverstellbar, wodurch eine bei einer Verstellung des zweiten Abschnitts gleichbleibende Fuge zwischen dem ersten Abschnitt und dem Bauteil, insbesondere dem Karosseriebauteil, des Kraftrads erreicht ist. Bezüglich der weiteren Vorteile wird auf die obigen Erläuterungen verwiesen.

Die Verstelleinrichtung weist ein Stützelement auf, das zwischen dem zweiten Abschnitt der Sitzwanne und dem Bauteil angeordnet ist, insbesondere wobei das Stützelement auf dem Bauteil aufliegt und/oder fest an dem Bauteil angebracht ist. Das Stützelement bildet also einen Abstandshalter, der zumindest abschnittsweise den Abstand des zweiten Abschnitts der Sitzwanne von der Karosserie des Motorrads und damit die Höhe und/oder die Neigung des zweiten Abschnitts gegenüber dem ersten Abschnitt festlegt.

Gemäß einer Ausgestaltung der Erfindung grenzt der erste Abschnitt der Sitzwanne an einen Tank des Kraftrads an, insbesondere wobei der erste Abschnitt der Sitzwanne fest mit dem Tank verbunden ist. Durch die erfindungsgemäße Sitzbaugruppe ist also eine gleichbleibende Fuge zwischen der Sitzbaugruppe und dem Tank und damit ein optimaler Wetterschutz erreicht.

Weitere Vorteile und Merkmale der Erfindung ergeben sich aus der nachfolgenden Beschreibung und den beigefügten Zeichnungen, auf die Bezug genommen wird. In diesen zeigen:
- Figur 1 in einer Seitenansicht ein erfindungsgemäßes Kraftrad;
- Figur 2 in einer Schrägansicht eine Sitzwanne einer erfindungsgemäßen Sitzbaugruppe;
- Figur 3 die Sitzwanne von Figur 2 in einer Ansicht von unten; und
- Figur 4 in einer Schrägansicht ein Stützelement der erfindungsgemäßen Sitzbaugruppe von Figur 2.

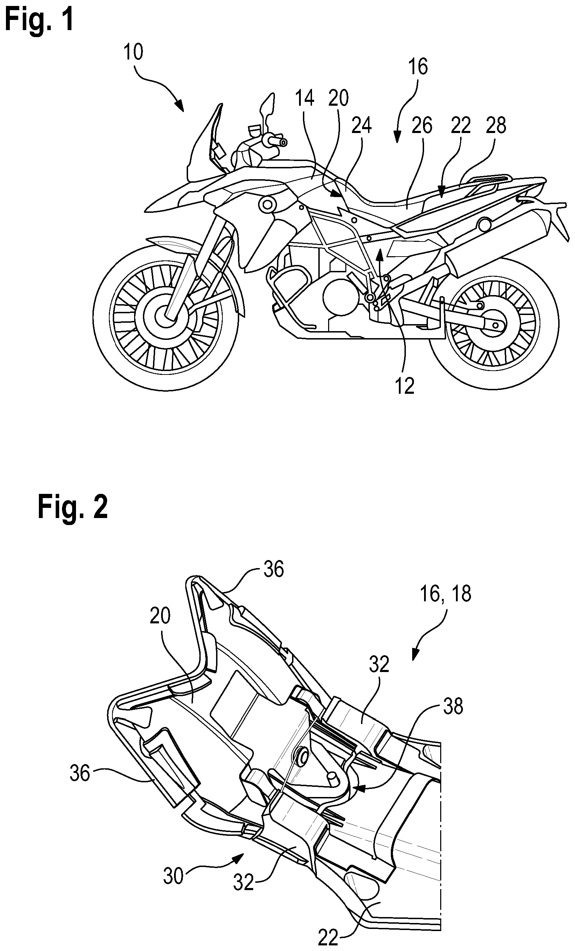

In Figur 1 ist ein Kraftrad 10 gezeigt, das als Motorrad ausgebildet ist. Das Kraftrad hat eine Karosserie 12, einen Tank 14 sowie eine verstellbare Sitzbaugruppe 16.

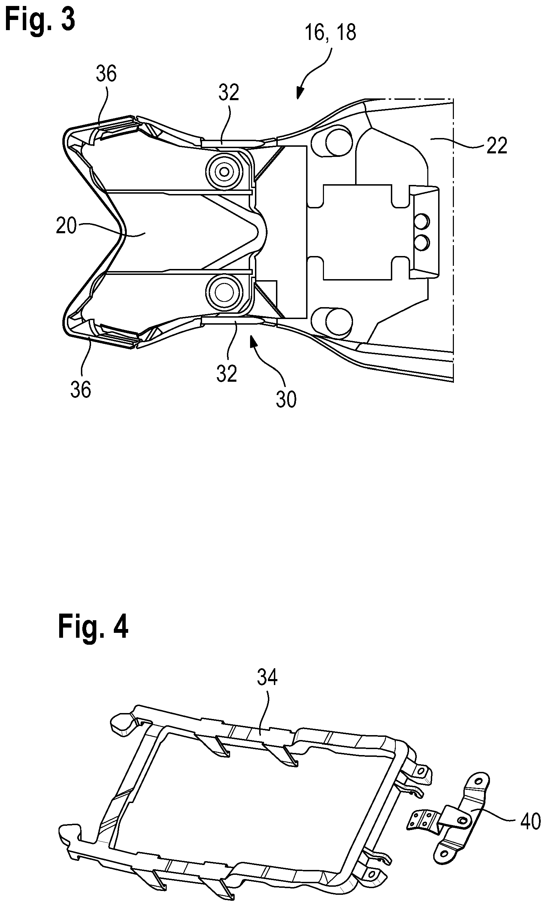

Die Sitzbaugruppe 16 umfasst eine in Figuren 2 und 3 gezeigte Sitzwanne 18, die einen ersten Abschnitt 20 und einen zweiten Abschnitt 22 aufweist Die Sitzbaugruppe 16 hat ferner ein erstes Sitzpolster 24 und ein zweites Sitzpolster 26, die mit einem gemeinsamen Sitzpolsterbezug 28 bezogen sind. Dabei ist das erste Sitzpolster 24 am ersten Abschnitt 20 und das zweite Sitzpolster 26 am zweiten Abschnitt 22 angebracht. Die beiden Sitzpolster 24, 26 sind in den Figuren 2 und 3 aus Illustrationsgründen nicht dargestellt.

Eine Sitzfläche für einen Fahrer und gegebenenfalls für einen Beifahrer ist auf dem zweiten Sitzpolster 26 vorgesehen. Bei dem ersten Sitzpolster 24 kann es sich hingegen im Wesentlichen um ein Zierbauteil handeln.

Ferner weist die Sitzbaugruppe 16 eine Verstelleinrichtung 30 mit zwei Gelenkelementen 32 und einem Stützelement 34 auf. Die Verstelleinrichtung 30 ist dazu ausgebildet, eine Höhe und/oder eine Neigung des zweiten Abschnitts 22 gegenüber dem ersten Abschnitt 20 zu verstellen.

Der erste Abschnitt 20 der Sitzwanne 18 weist einen Befestigungsabschnitt 36 auf, über den der erste Abschnitt 20 fest und unverschiebbar am Kraftrad 10, genauer gesagt am Tank 14 angebracht ist. Insbesondere ist der Befestigungsabschnitt 36 mittels geeigneter Befestigungsmittel am Tank 14 befestigt, zum Beispiel mittels Schrauben und/oder Bolzen.

Der erste Abschnitt 20 und der zweite Abschnitt 22 sind durch die beiden Gelenkelemente 32 der Verstelleinrichtung 30 relativ zueinander schwenkbar miteinander verbunden, wobei die Schwenkachse der Schwenkbewegung im Wesentlichen quer zur Längsrichtung des Kraftrads 10 verläuft.

Wie in den Figuren 2 und 3 zu sehen ist, sind die beiden Gelenkelemente 32, in Längsrichtung des Kraftrads 10 gesehen, jeweils an einem seitlichen, vorderen Ende des zweiten Abschnitts 22 und jeweils an einem seitlichen, hinteren Ende des ersten Abschnitts 20 angebracht.

Alternativ könnten die beiden Abschnitte 20, 22 jedoch auch über lediglich ein Gelenkelement 32 oder über mehr als zwei Gelenkelemente 32 miteinander verbunden sein.

Im Gegensatz zum ersten Abschnitt 20 ist der zweite Abschnitt 22 dabei nicht unmittelbar fest mit dem Kraftrad 10 verbunden, sodass der zweite Abschnitt 22 gegenüber dem ersten Abschnitt 20 und damit gegenüber dem Kraftrad 10 zur Neigung- und/oder Höhenverstellung verschwenkbar ist.

Zwischen dem ersten Abschnitt 20 und dem zweiten Abschnitt 22 ist dabei ein Spiel 38 vorgesehen, um gegebenenfalls eine Abstandsänderung zwischen dem ersten Abschnitt 20 und dem zweiten Abschnitt 22 zu kompensieren, die bei einer Schwenkbewegung des zweiten Abschnitts 22 auftreten kann.

Insbesondere erfolgt die Schwenkbewegung derart, dass die dem zweiten Abschnitt 22 zugeordnete Sitzfläche im Wesentlichen parallel zur Sitzfläche verschoben wird, d.h. dass die Sitzfläche eine Parallelverschiebung erfährt. Anders ausgedrückt ändert sich dabei also die Neigung der Sitzfläche nicht.

Das Stützelement 34 der Verstelleinrichtung 30 ist zwischen dem zweiten Abschnitt 22 und der Karosserie 12 angeordnet, insbesondere wobei das Stützelement 34 fest an der Karosserie 12 und/oder an einem Rahmenbauteil des Kraftrads 10 angebracht ist, beispielsweise mittels geeigneter Befestigungsmittel wie Schrauben und/oder Bolzen.

Wie in Figur 4 gezeigt ist, kann das Stützelement 34 ein Befestigungselement 40 aufweisen, mittels dem das Stützelement 34 an der Karosserie 12 und/oder dem Rahmenbauteil angebracht werden kann, insbesondere mittels geeigneter Befestigungsmittel wie Schrauben und/oder Bolzen.

Der zweite Abschnitt 22 liegt zumindest abschnittsweise auf dem Stützelement 34 auf, wodurch das Stützelement 34 zumindest abschnittsweise einen Abstand des zweiten Abschnitts 22 von der Karosserie 12 und damit eine Höhe und/oder eine Neigung des zweiten Abschnitts 22 gegenüber der Karosserie 12 festlegt. Das Stützelement 34 bildet also eine Art Abstandshalter zwischen der Karosserie 12 dem zweiten Abschnitt 22.

Vorzugsweise ist das Stützelement 34 austauschbar. Das Stützelement 34 kann also durch ein anders gestaltetes, weiteres Stützelement ersetzt werden, insbesondere wobei das weitere Stützelement eine andere Höhe und/oder Neigung des zweiten Abschnitts 22 gegenüber dem ersten Abschnitt 20 festlegt als das Stützelement 34. Um die Höhe und/oder die Neigung der Sitzfläche zu verstellen muss also einfach nur das Stützelement gegen ein anderes Stützelement ausgetauscht werden.

In der in den Figuren 2 bis 4 gezeigten Ausführungsform der Sitzbaugruppe 16 wird die Höhen- und/oder Neigungsverstellbarkeit des zweiten Abschnitts 22 also dadurch erreicht, dass der zweite Abschnitt 22 gegenüber dem ersten Abschnitt 20 verschwenkbar ist. Die Festlegung einer bestimmten Höhe und/oder einer bestimmten Neigung des zweiten Abschnitts 22 gegenüber dem ersten Abschnitt 20 und damit gegenüber dem Kraftrad 10 erfolgt durch das oben beschriebene, separate Stützelement 34, das als Abstandshalter zwischen am zweiten Abschnitt 22 und der Karosserie 12 dient.

Die Neigung und/oder die Höhe der Sitzfläche kann folglich beispielsweise mittels der folgenden Schritte verstellt werden: Zunächst wird der zweite Abschnitt 22 nach oben verschwenkt und das Stützelement 34 von der Karosserie 12 entfernt. Danach wird ein anderes Stützelement 34 an der Karosserie 12 angebracht und der zweite Abschnitt 22 wieder nach unten verschwenkt, sodass der zweite Abschnitt 22 nun eine veränderte Höhe und/oder Neigung gegenüber dem ersten Abschnitt 20 aufweist.

Natürlich sind jedoch auch andere Ausführungen der Verstelleinrichtung 30 möglich. Entscheidend ist lediglich, dass der erste Abschnitt 20 fest und unverschiebbar mit dem Kraftrad 10, insbesondere dem Tank 14 verbunden ist, während der zweite Abschnitt 22 gegenüber dem ersten Abschnitt 20 verstellbar, also nicht fest an der Karosserie 12 und/oder an einem Rahmenbauteil des Kraftrads 10 angebracht ist.

Die Verstelleinrichtung 30 kann einen Elektromotor und/oder einen Mechanismus umfassen, mittels dem die Neigung und/oder die Höhe des zweiten Abschnitts 22 gegenüber dem ersten Abschnitt 20 verstellbar ist. Die Höhen- und/oder Neigungsverstellung kann dabei zumindest teilweise automatisch und/oder manuell erfolgen.

Die Verstelleinrichtung 30 kann betätigbar sein, ohne dass die Sitzpolster 24, 26 und/oder andere Bauteile von der Sitzbaugruppe 16 abgenommen werden müssen. Zu diesem Zweck kann die Verstelleinrichtung 30 ein von außen zugängliches Betätigungselement aufweisen, wie ein Stellrad zur Betätigung des mechanischen Mechanismus und/oder einen Betätigungsschalter für den Elektromotor.

Außerdem kann das Stützelement 34 selbst zwischen wenigstens zwei Stellungen verstellbar sein, wobei die beiden Stellungen voneinander verschiedene Höhen und/oder Neigungen des zweiten Abschnitts 22 gegenüber dem ersten Abschnitt 20 festlegen.

Insbesondere ist mittels des Elektromotors und/oder mittels des mechanischen Mechanismus das oben beschriebene Stützelement 34 zwischen den wenigstens zwei Stellungen verstellbar.

## Patentansprüche

1. Verstellbare Sitzbaugruppe (16) für ein Kraftrad (10), mit einer Sitzwanne (18), die einen ersten Abschnitt (20) und einen zweiten Abschnitt (22) aufweist, und einer Verstelleinrichtung (30), wobei der erste Abschnitt (20) der Sitzwanne (18) einen Befestigungsabschnitt (36) zur festen und unverstellbaren Befestigung des ersten Abschnitts (20) am Kraftrad (10) aufweist, und wobei die Verstelleinrichtung (30) mit dem zweiten Abschnitt (22) der Sitzwanne (18) verbunden und dazu ausgebildet ist, eine Höhe und/oder eine Neigung des zweiten Abschnitts (22) der Sitzwanne (18) gegenüber dem ersten Abschnitt (20) zu verstellen, wobei der erste Abschnitt (20) in Bezug auf die Längsrichtung des Kraftrads (10) vor dem zweiten Abschnitt (22) angeordnet ist,
**dadurch gekennzeichnet, dass** die Verstelleinrichtung (30) ein Stützelement (34) umfasst, auf dem der zweite Abschnitt (22) aufliegt und das am Kraftrad (10) anbringbar ist, wobei das Stützelement (34) die Höhe und/oder die Neigung des zweiten Abschnitts (22) gegenüber dem ersten Abschnitt (20) festlegt, wobei das Stützelement (34) austauschbar ist.

2. Sitzbaugruppe (16) nach Anspruch 1, **dadurch gekennzeichnet, dass** die Verstelleinrichtung (30) elektrisch und/oder mechanisch betätigbar ist.

3. Sitzbaugruppe (16) nach einem der vorhergehenden Ansprüche, **dadurch gekennzeichnet, dass** die Verstelleinrichtung (30) dazu ausgebildet ist, den zweiten Abschnitt (22) der Sitzwanne (18) derart zu verstellen, dass eine dem zweiten Abschnitt (22) zugeordnete Sitzfläche im Wesentlichen parallel zur Sitzfläche verschoben wird.

4. Sitzbaugruppe (16) nach einem der vorhergehenden Ansprüche, **dadurch gekennzeichnet, dass** der erste Abschnitt (20) und der zweite Abschnitt (22) der Sitzwanne (18) zumindest über einen Teil der Verstelleinrichtung (30) miteinander verbunden sind.

5. Sitzbaugruppe (16) nach Anspruch 4, **dadurch gekennzeichnet, dass** die Verstelleinrichtung (30) wenigstens ein Gelenkelement (32) umfasst, das den ersten Abschnitt (20) und den zweiten Abschnitt (22) relativ zueinander schwenkbar verbindet.

6. Sitzbaugruppe (16) nach einem der vorhergehenden Ansprüche, **dadurch gekennzeichnet, dass** die Sitzbaugruppe (16) ein erstes Sitzpolster (24) und ein zweites Sitzpolster (26) aufweist, wobei das erste Sitzpolster (24) und das zweite Sitzpolster (26) am ersten Abschnitt (20) beziehungsweise am zweiten Abschnitt (22) der Sitzwanne (18) angeordnet sind, insbesondere befestigt.

7. Sitzbaugruppe (16) nach Anspruch 6, **dadurch gekennzeichnet, dass** die beiden Sitzpolster (24, 26) mit einem gemeinsamen Sitzpolsterbezug (28) bezogen sind.

8. Kraftrad (10) mit einer Sitzbaugruppe (16) nach einem der vorhergehenden Ansprüche, wobei der erste Abschnitt (20) der Sitzwanne (18) fest und unverstellbar mit einem Bauteil, insbesondere einem Karosseriebauteil, des Kraftrads (10) verbunden ist und das Stützelement (34) zwischen dem zweiten Abschnitt (22) und einer Karosserie (12) des Kraftrads (10) angeordnet ist.

9. Kraftrad (10) nach Anspruch 8, **dadurch gekennzeichnet, dass** der erste Abschnitt (20) der Sitzwanne (18) an einen Tank (14) des Kraftrads (10) angrenzt, insbesondere wobei der erste Abschnitt (20) der Sitzwanne (18) fest mit dem Tank (14) verbunden ist.

10. Kraftrad (10) nach einem der Ansprüche 8 oder 9, **dadurch gekennzeichnet, dass** die Verstelleinrichtung (30) ein Stützelement (34) aufweist, das zwischen dem zweiten Abschnitt (22) der Sitzwanne (18) und dem Bauteil angeordnet ist, insbesondere wobei das Stützelement (34) auf dem Bauteil aufliegt und/oder fest an dem Bauteil angebracht ist.

## Claims

1. Adjustable seat assembly (16) for a motorcycle (10), comprising a seat pan (18) which has a first portion (20) and a second portion (22), and an adjusting device (30), wherein the first portion (20) of the seat pan (18) has a fastening portion (36) for the fixed and non-adjustable fastening of the first portion (20) to the motorcycle (10), and wherein the adjusting device (30) is connected to the second portion (22) of the seat pan (18) and is designed to adjust a height and/or an inclination of the second portion (22) of the seat pan (18) relative to the first portion (20), wherein the first portion (20) is arranged in front of the second portion (22) in relation to the longitudinal direction of the motorcycle (10), **characterized in that** the adjusting device (30) comprises a support element (34), on which the second portion (22) rests and which can be attached to the motorcycle (10), wherein the support element (34) defines the height and/or the inclination of the second portion (22) relative to the first portion (20), wherein the support element (34) is interchangeable.

2. Seat assembly (16) according to Claim 1, **characterized in that** the adjusting device (30) can be actuated electrically and/or mechanically.

3. Seat assembly (16) according to either of the preceding claims, **characterized in that** the adjusting device (30) is designed to adjust the second portion (22) of the seat pan (18) in such a way that a seat surface associated with the second portion (22) is moved substantially parallel to the seat surface.

4. Seat assembly (16) according to one of the preceding claims, **characterized in that** the first portion (20) and the second portion (22) of the seat pan (18) are connected to each other at least via a part of the adjusting device (30).

5. Seat assembly (16) according to Claim 4, **characterized in that** the adjusting device (30) comprises at least one articulated element (32) which connects the first portion (20) and the second portion (22) pivotably relative to each other.

6. Seat assembly (16) according to one of the preceding claims, **characterized in that** the seat assembly (16) has a first seat cushion (24) and a second seat cushion (26), wherein the first seat cushion (24) and the second seat cushion (18) are arranged on, in particular fastened to, the first portion (20) and the second portion (22), respectively, of the seat pan (26).

7. Seat assembly (16) according to Claim 6, **characterized in that** the two seat cushions (24, 26) are covered with a common seat cushion cover (28).

8. Motorcycle (10) with a seat assembly (16) according to one of the preceding claims, wherein the first portion (20) of the seat pan (18) is connected fixedly and non-adjustably to a component, in particular a body component, of the motorcycle (10), and the support element (34) is arranged between the second portion (22) and a body (12) of the motorcycle (10).

9. Motorcycle (10) according to Claim 8, **characterized in that** the first portion (20) of the seat pan (18) adjoins a tank (14) of the motorcycle (10), in particular wherein the first portion (20) of the seat pan (18) is connected fixedly to the tank (14).

10. Motorcycle (10) according to either of Claims 8 or 9, **characterized in that** the adjusting device (30) has a support element (34) which is arranged between the second portion (22) of the seat pan (18) and the component, in particular wherein the support element (34) rests on the component and/or is attached fixedly to the component.

## Revendications

1. Ensemble de siège réglable (16) pour un motocycle (10), avec un bac de siège (18) qui présente une première section (20) et une deuxième section (22), et un dispositif de réglage (30), la première section (20) du bac de siège (18) présentant une section de fixation (36) pour la fixation fixe et non réglable de la première section (20) au motocycle (10), et le dispositif de réglage (30) étant relié à la deuxième section (22) du bac de siège (18) et étant réalisé pour régler une hauteur et/ou une inclinaison de la deuxième section (22) du bac de siège (18) par rapport à la première section (20), la première section (20) étant agencée avant la deuxième section (22) par rapport à la direction longitudinale du motocycle (10),
**caractérisé en ce que** le dispositif de réglage (30) comprend un élément d'appui (34) sur lequel repose la deuxième section (22) et qui peut être monté sur le motocycle (10), l'élément d'appui (34) fixant la hauteur et/ou l'inclinaison de la deuxième section (22) par rapport à la première section (20), l'élément d'appui (34) pouvant être remplacé.

2. Ensemble de siège (16) selon la revendication 1, **caractérisé en ce que** le dispositif de réglage (30) peut être actionné électriquement et/ou mécaniquement.

3. Ensemble de siège (16) selon l'une quelconque des revendications précédentes, **caractérisé en ce que** le dispositif de réglage (30) est configuré pour régler la deuxième section (22) du bac de siège (18) de telle sorte qu'une surface d'assise associée à la deuxième section (22) soit déplacée essentiellement parallèlement à la surface d'assise.

4. Ensemble de siège (16) selon l'une quelconque des revendications précédentes, **caractérisé en ce que** la première section (20) et la deuxième section (22) du bac de siège (18) sont reliées entre elles au moins par une partie du dispositif de réglage (30).

5. Ensemble de siège (16) selon la revendication 4, **caractérisé en ce que** le dispositif de réglage (30) comprend au moins un élément d'articulation (32) qui relie la première section (20) et la deuxième section (22) de manière à pouvoir pivoter l'une par rapport à l'autre.

6. Ensemble de siège (16) selon l'une quelconque des revendications précédentes, **caractérisé en ce que** l'ensemble de siège (16) présente un premier rembourrage de siège (24) et un deuxième rembourrage de siège (26), le premier rembourrage de siège (24) et le deuxième rembourrage de siège (26) étant agencés, notamment fixés, respectivement sur la première section (20) et sur la deuxième section (22) du bac de siège (18).

7. Ensemble de siège (16) selon la revendication 6, **caractérisé en ce que** les deux rembourrages de siège (24, 26) sont recouverts d'un revêtement de rembourrage de siège commun (28).

8. Motocycle (10) avec un ensemble de siège (16) selon l'une quelconque des revendications précédentes, dans lequel la première section (20) du bac de siège (18) est reliée de manière fixe et non réglable à un composant, notamment un composant de carrosserie, du motocycle (10) et l'élément d'appui (34) est agencé entre la deuxième section (22) et une carrosserie (12) du motocycle (10).

9. Motocycle (10) selon la revendication 8, **caractérisé en ce que** la première section (20) du bac de siège (18) est adjacente à un réservoir (14) du motocycle (10), notamment dans lequel la première section (20) du bac de siège (18) est reliée de manière fixe au réservoir (14).

10. Motocycle (10) selon l'une quelconque des revendications 8 ou 9, **caractérisé en ce que** le dispositif de réglage (30) présente un élément d'appui (34) agencé entre la deuxième section (22) du bac de siège (18) et le composant, notamment dans lequel l'élément d'appui (34) repose sur le composant et/ou est monté de manière fixe sur le composant.
